Europäisches Patentamt

(19) European Patent Office

Office européen des brevets

(11) Numéro de publication: **0 236 833**
**A2**

(12) **DEMANDE DE BREVET EUROPEEN**

(21) Numéro de dépôt: **87102565.6**

(22) Date de dépôt: **24.02.87**

(51) Int. Cl.³: **H 04 N 7/167**

(30) Priorité: **07.03.86 CH 959/86**

(43) Date de publication de la demande:
**16.09.87 Bulletin 87/38**

(84) Etats contractants désignés:
**BE DE ES GB IT LU**

(71) Demandeur: **TECHNICAL DEVELOPMENTS AND INVESTMENTS EST.**

**FL-9492 Eschen(LI)**

(72) Inventeur: **Zberg, Francois J.**
**La Buseliere**
**CH-1634 Pont-la-Ville(CH)**

(54) Procédé et dispositifs d'analyse et de reconnaissance automatique du code de cryptage d'émission de télévision.

(57) Le procédé d'analyse et de reconnaissance automatique du code de cryptage d'émissions de télévision consiste à évaluer le décalage appliqué à un certain nombre x de lignes successives du cycle de cryptage, puis à rechercher dans une table, l'unique code de cryptage qui donne, en cette position du cycle, la suite des x valeurs de décalage trouvée. Afin d'analyser le décalage de chacune de ces x lignes, le procédé selon l'invention consiste à évaluer, dans un premier temps, le décalage relatif de chacune des x-1 lignes par rapport à la première, par l'étude du décalage relatif d'une transition de luminance donnée qui soit présente sur l'ensemble de ces x lignes et qui, avant cryptage, reflète un détail vertical à l'image puis, dans un deuxième temps, à évaluer le décalage absolute chancune de ces x lignes par comparaison à une ligne parmis les x à laquelle a été appliqué un décalage minimal au cryptage.

EP 0 236 833 A2

PROCEDE ET DISPOSITIFS D'ANALYSE ET DE RECONNAISSANCE
AUTOMATIQUE DU CODE DE CRYPTAGE D'EMISSIONS DE TELEVISION.
----------------------------------------------------------------

La présente invention a trait au domaine de la
télévision dite cryptée et concerne plus précisement la
recherche du code de cryptage, utilisé dans le cadre du
cryptage d'image télévisée par application de retards entre
le signal image de chaque ligne vidéo et l'impulsion de
synchronisation de ligne, ces retards étant variables et
établis d'une ligne à l'autre d'après un code
pseudo-aléatoire. Un tel cryptage détruit la structure
verticale de l'image, la rendant inintelligible, les lignes
étant décalées les unes par rapport aux autres et, pour une
meme ligne, d'une trame à l'autre de meme parité dans un
meme cycle. Seule une compensation de ces retards à la
réception permet de rétablir la synchronisation des
différents signaux d'image d'une ligne à l'autre, le code de
compensation étant lui-meme fonction du code pseudo-
aléatoire des retards utilisé lors du cryptage.      —

De tels dispositifs de cryptage et de
décryptage existent à l'heure actuelle en Europe dans le
cadre de télévisions à prépaiement, destinées à n'etre
décodées que par une certaine catégorie d'abonnés (cf. brevet
français 75.34029 et demandes de brevets français 82.05006
et 82.05007).

Les demandes de brevets suisses N° 87/85 et
1289/85, déposées les 9 janvier et 22 Mars 1985 par
Technical Developments & Investments, décrivent différents
procédés et dispositifs d'analyse et de reconnaissance du
code de cryptage d'émissions de télévision, dont la présente
invention ne représente qu'une autre forme, plus rapide,
d'analyse et de reconnaissance automatique du code de
cryptage d'émissions de télévision.

Le but de l'invention est d'arriver à
déterminer le cycle pseudo-aléatoire des décalages utilisé
lors du cryptage, de manière à le restituer à un décodeur
adapté qui sera alors capable de fournir une image correcte à partir de la version cryptée de l'image, ceci sans qu'il soit nécessaire à l'organisme crypteur de communiquer à chaque abonné le nouveau code de cryptage utilisé à chaque changement de celui-ci.

Il faut toutefois, pour que cette invention soit utilisable, que le code pseudo-aléatoire des décalages successifs entre le signal d'image vidéo de ligne et l'impulsion de synchronisation de cette même ligne, d'une ligne à l'autre, soit un code cyclique, c'est à dire établi pour un nombre fini T de trames et réinitialisé au terme de ces T trames grace à une indication de synchronisation de cycle portée par l'émission vidéo, l'émission audio ou les deux ensemble (par exemple, le cycle peut etre réinitialisé toutes les 6 trames grace à un niveau de blanc uniforme porté par la dernière ligne de la trame de fin de cycle, cette dernière ligne de trame restant noire dans les 5 autres trames du cycle, comme le suggère la demande de brevet française N°82.05008).

Il faut en outre que le nombre des décalages différents possibles soit un nombre fini; appelons-le d (par exemple d=3, c'est-à-dire 3 types de décalages différents T1, T2, T3 avec, par exemple, T1=0 , T2=s , T3=2s et avec s=1µs).

Il faut enfin, pour certaines formes de réalisation de l'invention, que le nombre des différents codes pseudo-aléatoires possibles ne soit pas infini et que en particulier, en une position déterminée du cycle, il n'existe jamais plus de n valeurs successives de décalage communes pour deux codes différents quelconques pris parmis les différents codes pseudo-aléatoires possibles.

Toutes ces différentes conditions sont effectivement réalisées dans le cadre des applications européennes actuelles de ce mode de cryptage.

Lorsque nous parlerons, dans le cadre de ce brevet et conformement aux spécificités techniques couramment en vigueur, de "lignes successives" relativement au code ou au cycle de cryptage, il s'agira toujours de lignes successives d'une meme trame et non pas de lignes successives à l'écran.

Le procédé d'analyse selon l'invention consiste à évaluer le décalage relatif appliqué au cryptage entre deux lignes, successives ou non, en analysant la position sur chacune de ces lignes d'une transition de luminance déterminée (une telle transition de luminance est sélectionnée par son intensité de blanc qui doit etre supérieure à un niveau minimum fixé). En effet, pour autant que cette transition de luminance reflète à l'image, avant cryptage, un détail vertical s'étendant au moins sur les deux lignes analysées, le décalage relatif de cette transition entre ces deux lignes, après cryptage, sera directement fonction de la différence relative entre les deux décalages appliqués au cryptage à ces deux lignes.

D'autre part, la connaissance du décalage relatif d'une ligne par rapport à une ligne à laquelle à été appliquée une valeur de décalage extrème, permet d'en déduire le décalage absolu appliqué à cette ligne au cryptage. Ceci est notemment le cas lorsque l'on connait les décalages relatifs entre plusieurs lignes, chacune par rapport à la précédente ou chacune par rapport à une meme et unique ligne, et que figurent parmis les lignes analysées au moins deux lignes auxquelles ont été appliquées au cryptage les deux valeurs de décalage extrèmes. Il suffit alors d'évaluer, de proche en proche, le décalage relatif de chacune de ces lignes par rapport à celle à laquelle a été appliqué, par exemple, le décalage minimal pour en déduire le décalage absolu appliqué au cryptage à chacune de ces lignes.

Un tel procédé d'analyse peut notemment servir à trouver le code de cryptage utilisé pour une émission de télévision, ceci en analysant le décalage relatif entre lignes successives deux à deux jusqu'à analyser la totalité des lignes composants le cycle, ou bien en analysant le décalage relatif de chacune des lignes composant le cycle par rapport à une meme et unique ligne, ou encore en analysant séparément plusieurs groupes de lignes (dont l'ensemble constitue le cycle entier) selon l'une des méthodes indiquée juste avant. Parmis les lignes analysées figurent alors forcement au moins deux lignes auxquelles ont été appliquées

deux valeurs de décalage extrêmes, l'une de ces lignes pouvant alors servir à définir le décalage absolu individuel de chacune des lignes constituant le cycle. Cet ensemble de décalages absolus, classé par lignes succéssives du cycle, constitue alors le code de cryptage recherché.

Le procédé d'analyse et de reconnaissance automatique du code de cryptage d'émission de télévision consiste à analyser la valeur du décalage absolu d'un certain nombre $x$ ($x > n$) de lignes successives en une position déterminée du cycle et à rechercher, dans une table de comparaison, l'unique code pseudo-aléatoire de cryptage qui donne, en la position d'analyse choisie, les $x$ décalages relevés à l'analyse.

Un tel procédé est notemment utilisable lorsque le nombre des codes pseudo-aléatoires différents possibles est faible, et que le nombre $n$ maximal de valeurs de décalage communes à deux codes différents en une position déterminée du cycle est faible.

La partie "analyse automatique" du procédé selon l'invention consiste à évaluer, en une position déterminée du cycle, la valeur des décalages absolus appliqués à $x$ lignes successives ($x > n$) en analysant la position relative, sur chacune de ces lignes, d'une transition de luminance donnée.

En effet pour une valeur de $x$ suffisemment petite (par exemple 10 lignes), il est frequent de trouver une transition de luminance importante qui soit verticale à l'image avant cryptage, c'est à dire dont la position soit identique sur plusieurs lignes successives avant cryptage, et qui soit présente sur l'ensemble des $x$ lignes prises en compte dans l'analyse. Une telle transition peut alors servir à l'analyse puisque le décalage relatif de cette transition entre deux lignes reflète directement la différence relative entre les décalages appliqués au cryptage entre ces lignes. Si, de plus, parmis les $x$ lignes analysées figurent les deux valeurs extrêmes de décalage possibles, on peut en déduire la valeur individuelle de décalage appliquée au cryptage à chacune de ces $x$ lignes.

Ainsi, si à la position d'analyse du cycle choisie, et pour un code quelconque, on appelle m le nombre maximal de lignes successives pouvant etre obtenues au cryptage telles qu'il soit possible, parmis ces m lignes, de ne pas avoir les deux valeurs extrèmes de décalage, il suffira de prendre x>m pour déduire de l'analyse les décalages individuels absolus des x lignes analysées.

C'est pourquoi, afin de pouvoir réaliser l'analyse et la recherche automatique du code de cryptage, x devra etre pris supérieur a la plus grande des deux valeurs de m et n. De meme, si l'on souhaite pouvoir réaliser cette analyse et recherche automatique du code de cryptage à différents endroits du cycle, il suffira de s'assurer que x est pris supérieur à la plus grande des valeurs de n et m calculées en au moins un des endroits ou pourra s'effectuer cette analyse.

La partie "reconnaissance automatique" du procédé selon l'invention consiste à rechercher dans une mémoire ou sont stockées les informations necessaires, l'unique code de cryptage qui donne les x valeurs de décalage absolues trouvées à l'endroit du cycle analysé.

-Dans un premier cas de figure, la mémoire dispose de l'ensemble des différentes séries de x valeurs de décalage absolus possibles en une position déterminée du cycle, dite de référence, ainsi que, pour chacune de ces séries, du code de cryptage lui correspondant. Une simple recherche par analogie donnera dans ce cas, pour une analyse de x lignes faite au meme endroit de référence du cycle, le code de cryptage recherché.

-Dans un second cas de figure l'analyse pourra etre faite en différentes positions du cycle, les x valeurs de décalage trouvées en l'une de ces positions d'analyse et la localisation relative de cette position d'analyse par rapport à la position de référence, suffisant à définir le code de cryptage utilisé. Ce cas de figure est notemment utilisable lorsque les codes de cryptage sont tous des codes pseudo-aléatoires issus d'un meme registre à décalage.

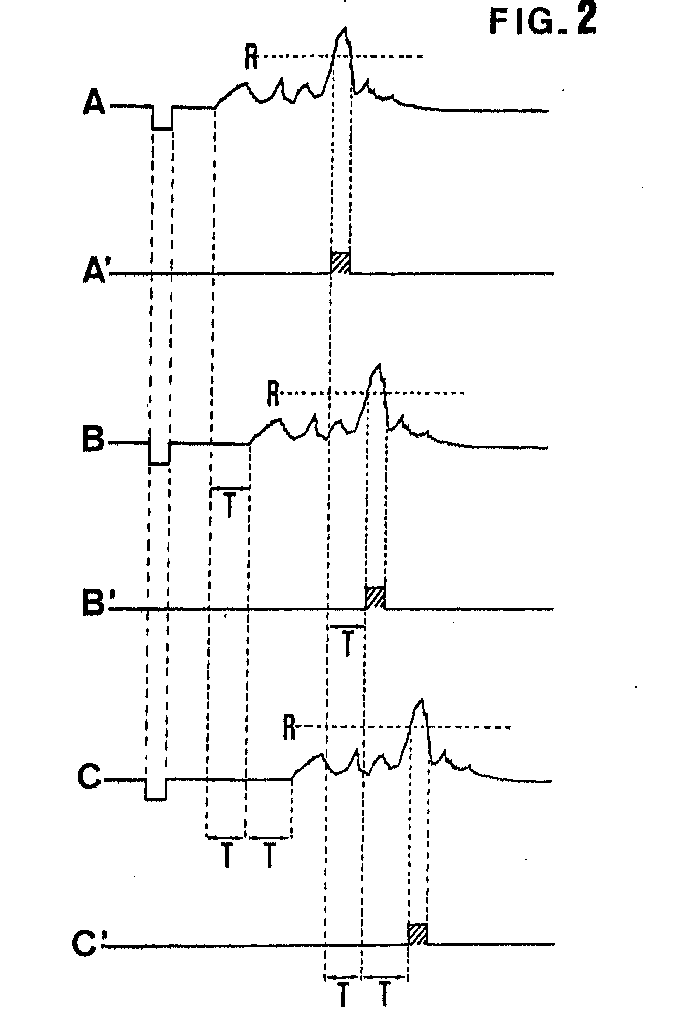

La figure 2 représente, du point de vue de la luminance, dans le cadre d'un exemple de cryptage à 3 temps de décalage (0,T,2T), et pour un signal image schématique, l'ensemble des 3 lignes vidéo (A,B,C) pouvant etre obtenues après cryptage et, pour chacune d'elle, le signal issus du comparateur video (A',B',C') pour un seuil de transition déterminé R.

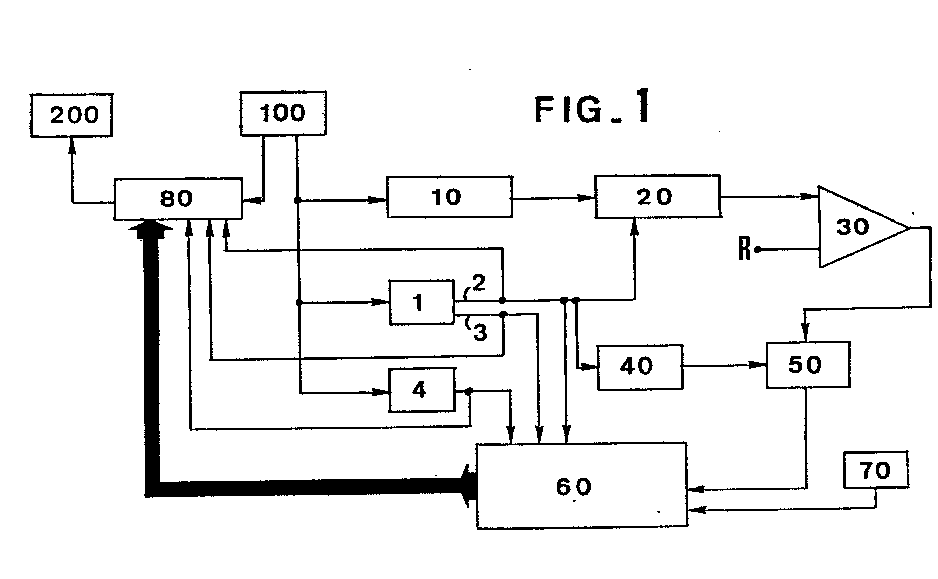

La figure 1 représente un exemple de dispositif d'analyse et de reconaissance automatique du code de cryptage mettant en oeuvre le procédé selon l'invention.

Un tel dispositif comprend:

a) Un extracteur de synchronisation 1 permettant d'obtenir à partir de l'image vidéo 100 les impulsions de synchronisation de ligne 2 et de trame 3.

b) Un extracteur de synchronisation du cycle de cryptage 4, lui-meme fonction du type d'information vidéo de synchronisation de cycle prévue par l'organisme crypteur (dans l'exemple décrit, une information vidéo portée par la dernière ligne de la dernière trame du cycle), et capable de fournir des impulsions de synchronisation de cycle.

c) Un filtre réjecteur de la sous-porteuse couleur 10.
Il s'agit d'un circuit "bouchon" à 4,286 MHz pour le SECAM; 4,43 MHz pour le PAL; 3,58 MHz pour le NTSC. Un tel filtre permet de filtrer la chrominance pour ne conserver que la luminance.

d) Un circuit d'alignement au noir 20 permettant de restituer la composante continue du signal. Ce circuit recoit les impulsions de synchronisation de ligne 2.

e) Un circuit comparateur 30 qui délivre un niveau logique 1 lorsque le niveau du signal vidéo est supérieur à un niveau de référence choisi R, permettant ainsi de signaler la présence d'une transition pouvant servir à l'analyse.

f) Un générateur de fenetre 40 permettant de ne prendre en compte dans l'analyse, et pour chaque ligne, qu'une certaine partie du signal image. Ce générateur de fenetre délivre un niveau logique 1 à l'intérieur des temps à prendre en compte pour l'analyse.

Ce générateur de fenetre reçoit les impulsions de synchronisation de ligne 2.

g) Une porte logique "ET" 50 qui traite les informations issues du générateur de fenetre d'une part, et du circuit comparateur d'autre part.

h) Un circuit d'analyse 60, contenant un microprocesseur, une RAM et une ROM, qui:

- évalue le décalage relatif entre deux lignes successives dès qu'existe un niveau logique 1 à la sortie de la porte 50 pour ces deux lignes, et que l'interprétation du décalage relatif entre ces deux lignes, à partir de la position relative de ce niveau logique sur les deux lignes, est compatible avec les décalages de cryptage possibles (c'est, par exemple, le premier des niveaux logiques 1 délivrés pour chaque ligne par le circuit 50 qui est pris en compte pour l'analyse du décalage relatif);

- évalue le décalage relatif de chacune des lignes suivantes par rapport a la première ligne analysée, ceci tant que la porte 50 délivre un niveau logique 1 sur les lignes suivantes et tant que l'interprétation de la position de ce niveau logique donne, pour ces lignes, un décalage compatible avec les décalages de cryptage possibles, ceci jusqu'à obtenir des valeurs de décalages relatifs portant sur x lignes successives;

- recommence l'analyse à zéro s'il ne parvient pas à obtenir de niveau logique 1 sur l'une des x lignes successives analysées, ou si la valeur d'un décalage relatif trouvé est incompatible avec les décalages de cryptage possibles, jusqu'à obtenir les valeurs de décalages relatifs portant sur x lignes successives;

- déduit de l'analyse effectuée sur ces x lignes successives le décalage absolu appliqué au cryptage à chacune de ces x lignes, dès lors que figurent parmis ces x lignes au moins deux lignes auxquelles ont été appliqués les deux décalages extremes au cryptage;

- recherche dans une table (ROM) le code de cryptage qui donne, en une position choisie de référence, la série de x décalages trouvée;

-déduit, lorsque la position d'analyse n'est pas la position de référence et que les codes de cryptage sont tous issus d'un meme registre à décalage, de la localisation relative de la position d'analyse par rapport à la position de référence, le véritable code de cryptage qui a été utilisé.

-fournit à un décodeur adapté 80, une fois le code de cryptage trouvé, les valeurs de décalage de compensation à appliquer au décryptage, chacune successivement au moment du passage de la ligne du cycle lui correspondant.

Le circuit d'analyse recoit les impulsions de synchronisation de ligne 2, de trame 3 et de cycle 4.

i) Un interrupteur 70 permet de lancer l'analyse.

j) Un décodeur adapté 80 permet, grace au code de décryptage qui lui est fourni par le circuit d'analyse à partir du code de cryptage trouvé, de transformer la version cryptée de l'image vidéo 100 en une version correctement décryptée 200.

Afin d'évaluer le décalage relatif entre deux lignes successives, le circuit d'analyse 60 doit disposer d'une horloge interne dont l'unité de temps est au plus égale au plus grand diviseur commun aux différents temps de décalage possibles.

Un tel dispositif permet en fin de compte et après un temps d'analyse très court (de l'ordre de la seconde pour un cycle de 6 trames et pour des images contenant des transitions de luminance apparaissant verticales à l'image avant cryptage), de reconnaitre le bon code de cryptage et par conséquent de le donner à un décodeur adapté pour décrypter les émissions télévisées ainsi cryptées.

La sécurité du dispositif de cryptage pour l'organisme crypteur est quand à elle entièrement préservée puisque seul l'organisme crypteur connait l'ensemble des différents codes de cryptage pouvant etre utilisés. Il demeure donc le seul à pouvoir réaliser de tels dispositifs de recherche automatique de code.

Les procédé et dispositifs selon l'invention peuvent etre également utilisés pour la recherche du code de cryptage lorsque les émissions de télévision sont non seulement cryptées comme indiqué dans le préambule du texte de ce brevet, mais appliquent également un procédé d'inversion de polarité du signal vidéo (tel que décrit dans la demande de brevet français 75 34029), opéré sur une ou plusieurs lignes déterminées du cycle et pour chaque cycle sur les memes lignes. de telles inversions de polarité peuvent etre reconnues par un circuit simple, et le signal etre restitué corrigé de cette inversion de polarité, ce qui permet d'appliquer les procédé et dispositif de la présente invention, L'information indiquant que telle ligne du cycle a subi une inversion de polarité peut facilement etre conservée dans une mémoire, et l'information etre restituée au décodeur adapté de façon à rectifier cette inversion de polarité conjointement à la compensation des décalages qu'il opère.

Enfin, pour vérifier que le code trouvé par le procédé d'analyse et de reconnaissance automatique est bien le bon, il est possible de mettre en oeuvre l'un des dispositifs décrits dans les demandes de brevet suisses déposées par Technical Developments § Investments et citées en introduction de ce brevet.

REVENDICATIONS

----------------

1. Procédé d'analyse du décalage relatif entre deux lignes successives cryptées d'une meme trame d'émission de télévision, le cryptage étant obtenu par imposition d'un retard, variable d'une ligne à l'autre, entre le signal image de la ligne vidéo et l'impulsion de synchronisation de ligne et ces retards étant établis d'une ligne à l'autre selon un code pseudo-aléatoire réinitialisé de manière cyclique toutes les T trames, caractérisé en ce qu'un circuit d'analyse recherche sur ces deux lignes la présence d'une transition de luminance supérieure à un seuil donné et évalue le décalage relatif de cette transition entre les deux lignes, ce décalage relatif étant, pour une transition de luminance reflétant un détail vertical à l'image, directement fonction de la différence relative entre les deux décalages appliqués aux deux lignes analysées.

2. Procédé selon la revendication 1, caractérisé en ce que l'analyse du décalage relatif entre deux lignes peut s'effectuer entre deux lignes non successives, dès lors que la transition de luminance qui est analysée reflète un détail vertical à l'image qui est présent sur ces deux lignes, l'analyse du décalage relatif de cette transition entre ces deux lignes étant directement fonction de la différence relative entre les deux décalages appliqués à ces deux lignes.

3. Procédé d'analyse du code de cryptage selon la revendications 1 ou 2, caractérisé en ce que l'analyse du décalage relatif entre deux lignes est répété sur l'ensemble des lignes constituant le cycle de codage, soit par groupes de deux lignes successives, soit , s'il éxiste une transition de luminance reflétant un détail vertical à l'image s'étendant sur toutes les lignes du cycle, pour chacune des lignes par rapport à une unique ligne de référence, l'ensemble des informations receuillies permettant de déduire en définitive, du décalage relatif de chaque ligne par rapport a deux lignes de décalages extrèmes, l'ensemble des décalages absolus individuels de chacune de ces lignes, ce qui constitue, dans l'ordre successif des lignes du cycle, le code pseudo-aléatoire utilisé au cryptage.

4. Procédé d'analyse et de reconnaissance du code de cryptage selon l'une des revendications 1 à 3, caractérisé en ce que, lorsque le code pseudo-aléatoire utilisé est pris parmi un nombre fini de différents codes de cryptage pseudo-aléatoires possibles et que, d'une par, il n'existe en une position déterminée du cycle, entre deux quelconques de ces différents codes possibles, jamais plus de n valeurs successives de décalage communes pour ces deux codes et que, d'autre part, il n'existe en cette position du cycle, jamais plus de m lignes successives exemptes des deux valeurs extremes de décalage possibles, il suffit de limiter l'analyse à x lignes successives prises en cette position déterminée du cycle -x étant pris plus grand que n et m- et de déduire, de la position relative de chacune de ces lignes par rapport à deux lignes de décalages extrèmes, la valeur du décalage absolu de chacune de ces lignes, un circuit de reconnaissance permettant alors de déterminer, grace aux x valeurs successives de décalages absolus stockés à l'issue de l'analyse et qui sont spécifiques du code de cryptage, celui des différents codes pseudo-aléatoires de cryptage utilisé.

5. Procédé selon la revendication 4, caractérisé en ce que lorsque les différents codes pseudo-aléatoires possibles sont tous issus d'un meme registre à décalage, il est possible d'effectuer l'analyse en différents endroits du cycle dès lors que x est choisi supérieur à la plus grande des valeurs de n et m calculées en au moins une des positions du cycle ou peut s'effectuer l'analyse, les x valeurs de décalages absolus obtenues pour l'une des positions d'analyse, et la localisation relative de cette position d'analyse par rapport à une position de référence déterminée, permettant finalement de reconnaitre le code de cryptage utilisé.

6. Procédé selon l'une des revendications 1 à 5, caractérisé en ce que l'analyse de transition de luminance s'effectue, pour chaque ligne, sur une partie donnée seulement du signal image.

7. Dispositif pour la mise en oeuvre du procédé selon la revendication 1 ou 2, caractérisé en ce qu'il comprend

a) un extracteur de synchronisation (1) qui permet d'extraire les impulsions de synchronisation de ligne (2) et de trame (3) du signal de télévision reçu crypté (100);

b) un circuit d'analyse des informations de synchronisation de cycle (4), qu'elles soient vidéo ou audio ou les deux, et permettant de générer des impulsions de synchronisation de cycle;

c) un filtre réjecteur de la sous porteuse couleur (10), permettant de ne conserver de l'information vidéo que la luminance;

d) un circuit d'alignement au noir (20) permettant de restituer la composante continue du signal;

e) un circuit comparateur (30) qui délivre un niveau logique 1 lorsque le niveau du signal est supérieur à un niveau de référence choisi;

f) un circuit d'analyse (60) permettant d'évaluer le décalage entre deux lignes prises en compte dans l'analyse, en évaluant la variation relative de la position d'un niveau logiques 1 donné sur ces deux lignes.

8. Dispositif selon la revendication 7 pour la mise en oeuvre du procédé selon la revendication 4 ou 5, caractérisé en ce que le circuit d'analyse (60) évalue, pour une position du cycle donnée, les décalages relatifs entre x lignes successives, chacune par rapport à sa précédente ou chacune par rapport à la première, et en déduit le décalage absolu de chacune d'entre elles, puis recherche dans une mémoire le code pseudo-aléatoire unique qui donne, pour cette position d'analyse, la suite des x décalages absolus trouvés.

9.   Dispositif selon les revendications 7 et 8 pour la mise en oeuvre du procédé selon la revendication 6, caractérisé en ce qu'il comprend en plus

a)   un générateur de fenetre (40) permettant de ne prendre en compte dans l'analyse pour chaque ligne qu'une partie déterminée du signal image;

b)   une porte logique "ET" (50) permettant de ne laisser passer du circuit comparateur que les informations situées dans la fenetre définie par le générateur (40).

10.   Dispositif selon la revendication 8, caractérisé en ce que le circuit d'analyse (60) reprend automatiquement à son début une nouvelle analyse de x lignes successives dès lors que l'analyse en cours n'est pas possible sur l'une des lignes analysée ou donne des résultats qui sont incompatibles avec les décalages possibles au cryptage.

FIG_1

FIG. 2

0236833